Europäisches Patentamt

(19) European Patent Office

Office européen des brevets

(11) **EP 0 920 193 A2**

(12) **EUROPEAN PATENT APPLICATION**

(43) Date of publication:
02.06.1999 Bulletin 1999/22

(51) Int. Cl.$^6$: **H04N 1/407**

(21) Application number: 98309810.4

(22) Date of filing: 30.11.1998

(84) Designated Contracting States:
AT BE CH CY DE DK ES FI FR GB GR IE IT LI LU MC NL PT SE
Designated Extension States:
AL LT LV MK RO SI

(30) Priority: 29.11.1997 KR 9764372
17.12.1997 KR 9770034

(71) Applicant:
SAMSUNG ELECTRONICS CO., LTD.
Suwon-City, Kyungki-do (KR)

(72) Inventor: **Oh, Hyang-su**
**Suwon, Kyonggi-do (KR)**

(74) Representative:
**Tunstall, Christopher Stephen et al**
**Dibb Lupton Alsop,**
**Fountain Precinct**
**Balm Green, Sheffield S1 1RZ (GB)**

(54)    **Image processing apparatus and method**

(57)    An image processing apparatus and method capable of correcting errors due to an object difference in accordance with an element characteristic of an image reading sensor which is mounted in an image inputting device and removing an effect on the image due to a distortion of a white reference plate and a light source which are mounted in the image input device. A white correction and a black correction of the image using the reference data may be simultaneously performed while performing the selected operation for the image by using upper and lower limit reference voltages of an A/D converter.

FIG. 6A

FIG. 6B

## Description

## Background of the Invention

The present invention relates to an image processing apparatus and method, and more particularly to an image processing apparatus and method capable of improving a quality of an image by correcting distortion of an image reading sensor or a light source for analogue signals, and improving an image by controlling brightness and contrast, and removing a background colour of the object.

In general, a scanner emits light onto an object and converts light reflected by the object into an electric output value using a charge coupled device (CCD) and a contact image sensor (CIS). The output value is generally stored in a data storing device such as a hard disc of a personal computer.

The scanner which scans objects such as books and pictures may be specifically designed to carry out only a scanning function, or may be integrated with a printer and/or a facsimile device.

An analogue signal which is output from a CCD sensor (a photoelectric conversion device) has a deviation from pixel to pixel due to difference between pixels of a CCD sensor as a semiconductor element. When the scanner reads an image, the quality of the image is degraded due to distortion of a white reference plate and light emitting characteristics of a halogen lamp or a fluorescent lamp which may be used as a light source.

In order to prevent degradation of the image quality induced by the circuit element and parts, a black correction is carried out to correct the pixel to pixel difference due to an element characteristic of the CCD sensor in the input device. Also, a white correction is carried out to remove effects on the image due to the distortion of the white reference plate and the characteristics of the light source such as the fluorescent lamp or the halogen lamp.

In general, a method for correcting the distortion of the colour image input device has three steps.

Firstly, the method for correcting the distortion of the colour image includes the step of reading a quantity of dark current which is output from pixels of the CCD sensor to obtain black correcting data and then subtracting the black correcting data from the analogue signals which are output from the CCD sensor in the state that a light is not input into the CCD sensor.

Secondly, the method comprises the step of detecting white correcting data, that is, a maximum value of an image signal which is output after applying electric power to the light source and carrying out the black correction for the analogue signal generated by the CCD in response to light reflected by the white reference plate.

Thirdly, the method comprises the step of: carrying out an operation for regulating the white correcting data, which is generated by detecting the distortion of the white reference plate and the light source in the range between the black reference voltage and the maximum value of the analogue signal reflected by the white reference plate after applying the electric power to the light source.

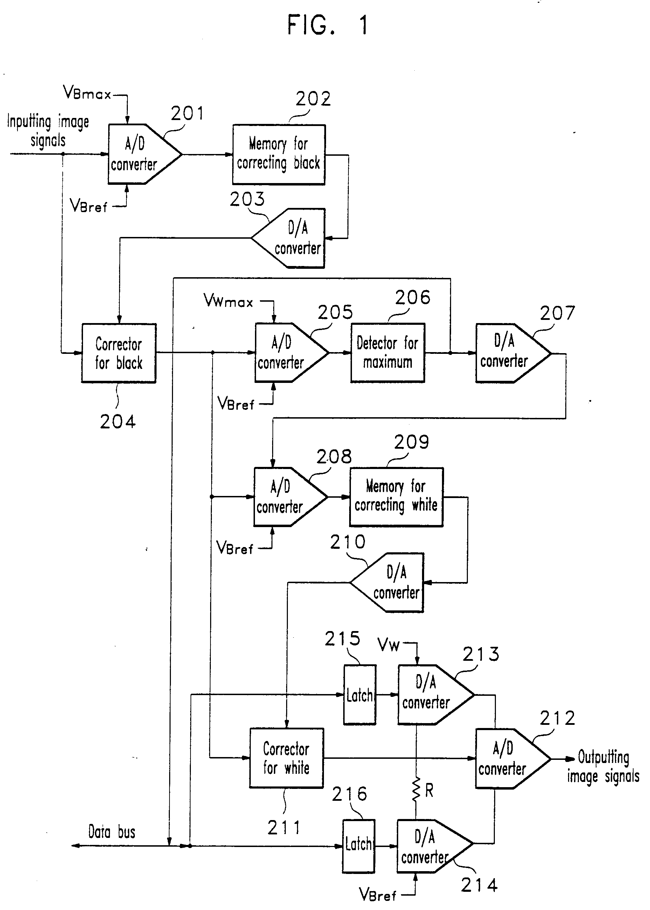

A conventional method for correcting the distortion of the colour image input device will be described in detail with reference to FIG. 1.

As shown in FIG. 1, during output of the analogue image signal by driving the CCD sensor in the dark state (that is, electric power is not applied to the light source) an analogue to digital converter (A/D converter) 201 carries out an operation to obtain black correcting data. The analogue signal output from the CCD sensor in the range between a black reference voltage $V_{bref}$ and a black maximum voltage $V_{bmax}$ is converted into digital black correcting data, which in turn is stored in a memory 202 for correcting black.

The memory 202 for correcting black has a storage capability proportional to the number of effective pixels of the CCD sensor. The black correcting data are stored in the order corresponding to an output synchronous signal of the CCD sensor.

Then, electric power is applied to the light source so as to provide light reflected by the white reference plate into the CCD sensor. The CCD sensor provides corresponding output signals to corrector 204. The black correcting data are converted into an analogue value by a digital to analogue converter (D/A converter) 203. The black correcting device 204 carries out an operation for correcting black by subtracting the black correcting data from the output signal of the CCD sensor.

The resulting analogue image signal, which is processed by the operation for correcting the black, is input into the A/D converter 205, and then to a maximum value detector, which in turn converts the signal into digital values in the range between a white maximum voltage $V_{wmax}$ and the black reference voltage $V_{bref}$. Continuously, the digital values are input in order into the detector 206, in which the maximum value of pixels can be detected. The output signal from detector 206 is applied to a data bus, and to a D/A converter 207 as an upper limit signal.

A/D converter 208 converts the signal of which the black correction is completed (the output of black corrector 204) into digital data in the range between the black reference value $V_{bref}$ and the maximum value of the pixel data $V_{peak}$ of the white reference plate which are detected by the detector for detecting the maximum value 206, and converted by D/A converter 207. The digital data are stored in a memory 209 for correcting white.

Accordingly, when an image is to be read (scanned), the electric power is applied to the light source to provide light reflected by the object into the CCD sensor. The black correcting device 204 carries out the operation for correcting the black of the data which are transmitted from the black correcting memory 202 through the D/A converter 203 according to the analogue signal which is photoelectrically converted by the reflected light and output from the CCD sensor. The black corrected analogue data are then transmitted to A/D converters 205, 208 and white corrector 211.

The white correcting device 211 carries out the operation for correcting the white of the black corrected data which are transmitted from the white correcting memory 209 to the white correcting device 211 through the D/A converter 210.

A black reference value $V_{bref}$ is generated by D/A converter 214 from data supplied from the data bus, and stored in latch 216.

A white reference voltage $V_{wref}$ is generated by D/A converter 213 from data supplied from the data bus, and stored in latch 215.

The image signal of which the distortion is corrected is converted into digital image data between the black reference voltage $V_{bref}$ and the white reference voltage $V_{wref}$. Therefore, the image of the object can be read by using the digital data.

Conventional colour image input apparatus is typically produced as an application specific integrated circuit (ASIC) which carries out correction of the distortion.

In the image processing apparatus and method according to the present invention, however, since given values in a predetermined range are selectively used to control the contrast and brightness of the image by necessity, there is a problem in that when modified values are applied to the object, the control program of the image input apparatus must be modified to reset parameters according to the condition of the object.

## Summary of the Invention

The present invention aims to provide an apparatus and a method for image processing, in which the user can print the best image responding to a function selected by the user by adding, to the input device, functions of removing a distortion and a background colour of the image and controlling a contrast and a brightness of the image with respect to conversion of an analogue signal into a digital signal of the image.

The present invention accordingly provides an image processing apparatus comprising: an image input device and a controller, generating control signals; an A/D converter for converting an analogue image signal from the image input device into digital data by using a control signal from the controller,; an upper limit reference voltage setting means for setting an upper limit reference voltage for the A/D converter; a lower limit reference voltage setting means for setting a lower limit reference voltage for the A/D converter; a black correcting memory for storing black correcting data; a white correcting memory for storing white correcting data; and a maximum value detector for detecting a maximum pixel data value from digital image data output from the A/D converter.

The image processing apparatus preferably further comprises a reference data storing section for storing data supplied by the maximum value detector.

The image processing apparatus is preferably arranged such that the black correcting data is supplied by the A/D converter in response to an analogue image signal; and arranged such that the white correcting data is supplied by the A/D converter in response to an analogue image signal.

The controller is preferably arranged to supply one or mare of a changed value of a contrast, and a changed value of a brightness, and the upper and lower limit reference voltage setting means are arranged to set the upper and lower limit reference voltages in accordance with one or more of the changed value of a contrast, and the changed value of a brightness, the A/D converter thereby being enabled to perform correction of image distortion and image processing on the analogue image signal.

The control signals preferably provide one or more of a signal for selecting a mode of reading a magnitude of a black current output in accordance with pixels of the image input device; a signal for selecting a mode of reading a maximum value of an image signal output corresponding to a white reference plate; a signal for selecting a mode of performing an equalisation of the image after detecting distortions in the image signal corresponding to the white reference plate; a signal for selecting a contrast control mode; a signal for selecting a background colour removing mode; and a signal for selecting a brightness control mode.

The signal for selecting the mode of removing the background colour may include a signal for selecting a maximum pixel value of the document obtained in a prescanning mode as the upper limit voltage.

The signal for selecting the mode of removing the background colour may include a signal for selecting a maximum pixel value of a main scanning line of the image input device as the upper limit reference voltage.

The upper limit reference voltage setting means includes a first adder for adding a changed value of the upper limit value for controlling contrast, or a changed value of the upper limit value for controlling brightness, to data output from the white correcting memory, so as to obtain the upper limit reference voltage; a first selector for selecting any one of: a value output from the first adder; a value output from the maximum value detector; and a preset and input value

according to a control signal from the controller; and a first D/A converter for converting at least the output of the first adder.

The upper limit reference voltage setting means preferably includes a D/A converter receiving an output of the reference data storage section.

The lower limit reference voltage setting means preferably includes a second adder for adding a changed value of the lower limit value to the data output from the black correcting memory so as to obtain the lower limit reference voltage for controlling the contrast; a second selector for selecting any one of: a value output from the second adder; and a preset and input value, according to a control signal from the controller; and a second D/A converter for converting at least the output of the second adder.

The first and/or second selector may each be analogue switch.

In the lower limit reference voltage setting means, the second D/A converter may be is placed between the second adder and the second selector, to convert a digital output of the second adder into an analogue input to the second selector.

The image processing apparatus preferably further comprises at least one of: a maximum black voltage source for providing the upper limit reference voltage to create the black correcting value; and a maximum white voltage source for providing the upper limit reference voltage for detection of the maximum value.

The image processing apparatus may further comprise voltage sources for generating a black correcting value and a reference voltage for detecting the maximum value.

The reference data storing means preferably includes: a first latch for storing a maximum pixel value for a white reference plate of the image input device; a second latch for storing a maximum pixel value of a document data obtained by prescanning the document; and a third latch for storing a maximum pixel value in a main scanning line of the image input device.

The present invention also provides an image processing method using an image input apparatus having a pre-processor which includes a white correcting memory, a black correcting memory, and a detector for measuring maximum value, the method comprising the steps of: generating reference data and correcting distortion of the image; selecting an image processing operation from a selection of operations, including contrast control; brightness control; and removing a background colour of the image; setting an upper limit reference voltage and a lower limit reference voltage corresponding to the selected operation for use in digitally converting an analogue input image data; and simultaneously performing white correction and black correction of the image using the reference data, while performing the selected operation for the image, and digitally converting the image data using the upper and lower limit reference voltages.

The step for generating the reference data preferably includes the steps of: generating black correcting data to correct errors due to characteristics of an image input device; detecting a maximum value of pixel data from the black correcting data; and generating white correcting data to remove distortion effects on the image.

The step for setting the upper and lower limit reference voltages for controlling the contrast of the image preferably includes the steps of: multiplying a contrast control level by a changed value of the contrast; generating the upper limit reference voltage by subtracting the multiplied value from white correcting data which are output from the white correcting memory; and generating the lower limit reference voltage by adding the multiplied value to black correcting data which are output from the black correcting memory.

The changed value of the contrast may be obtained by dividing a maximum value of pixel data of a white reference image by the maximum control level of the contrast.

The step of setting the upper limit reference voltage and the lower limit reference voltage for brightness control may include the steps of: multiplying a brightness control level by a changed value of the upper limit reference values; generating the upper limit reference value by subtracting the multiplied value from a white correcting data which are output from the white correcting memory; and generating the lower limit reference voltage corresponding to black correcting data which are output from the black correcting memory.

The changed value of the upper limit reference value is obtained by subtracting a maximum pixel value of image, detected during a prescanning of the document, from the maximum pixel value of a white reference image; and by dividing the subtracted value by a maximum control level of the brightness.

Preferably, in order to remove the background colour of the image, the maximum pixel value of the image which is detected by the detector for measuring the maximum value is used as the upper limit reference value, while the black correcting data which is output from the black correcting memory is used as a lower limit reference value.

The image processing method may further include the step of outputting the image of which the image distortion is corrected and for which the selected operation is carried out, as digital image data.

The image of the object of which the distortion is corrected and for which the selected operation is carried out is preferably output in a form of a digital image.

## Brief Description of the Drawings

Certain characteristics, aims and advantages of the present invention will become more apparent from the following detailed description of certain embodiments, given by way of examples only, with reference to the accompanying drawings, in which:

FIG 1 is a block diagram showing a construction of an image pre-processor according to the prior art;

FIG 2 is a block diagram of an image pre-processor of an image processing apparatus according to a first embodiment of the present invention;

FIG 3 is a block diagram of an image pre-processor of an image processing apparatus according to a second embodiment of the present invention;

FIG 4 is a block diagram of the image processing apparatus of the first embodiment of the present invention;

FIG 5 is a block diagram of the image processing apparatus of the second embodiment of the present invention; and

FIG 6 is a flow chart showing the sequence of an image processing method according to the present invention.

## Detailed Description of the Invention

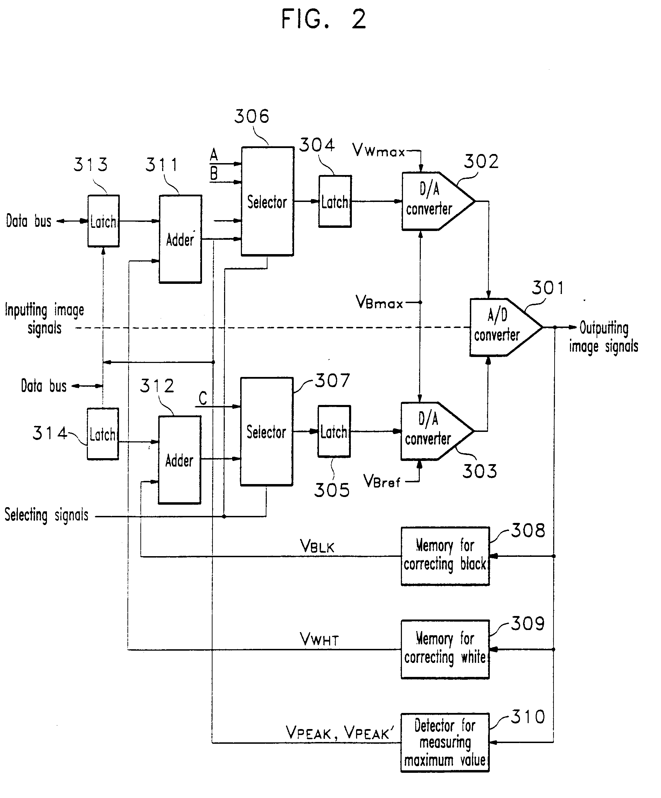

FIG 2 is a block diagram showing a circuit of a pre-processor of an apparatus for image processing according to a first embodiment of the present invention.

As shown in FIG 2, an analogue to digital converter 301 converts an output signal of CCD sensor (input image signals) into an output digital image signal. Digital to analogue converters 302 and 303 respectively generate an upper limit reference voltage and a lower limit reference voltage for A/D converter 301.

Digital data corresponding to the upper limited reference voltage and the lower limit reference voltage are respectively stored in latches 304 and 305.

Black correcting data which are outputted from the A/D converter 301 are stored in a black correcting memory 308. White correcting data which are output from A/D converter 301 are stored in a white correcting memory 309. A detector for measuring a maximum value 310 detects the maximum value of digital data which are output from A/D converter 301.

A first adder 311 receives data output from the white correcting memory 309 and a second adder 312 receives data output from the black correcting memory 308. Latches 313 and 314 receive temporary data which are transmitted through data busses from a controller of a scanner before providing data for the first and second adders 311 and 312.

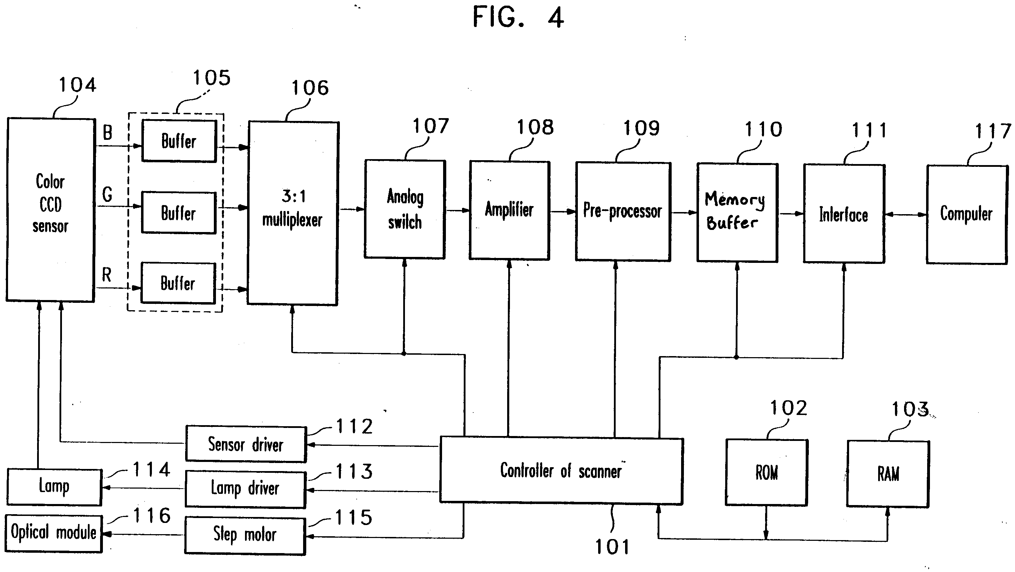

FIG 4 is a block diagram showing a construction of image processing apparatus according to the first embodiment of the present invention.

As shown in FIG 4, the controller 101 of the scanner controls the operations of the scanner. Above all, the controller 101 of the scanner generates a timing signal necessary for carrying out the scanning operation so as to read the image of the object as digital data.

A program and reference data are stored in ROM 102 so that the controller 101 of the scanner controls a scanner system in a predetermined order. Temporary data are stored in a RAM 103, which data are generated while the controller 101 of the scanner controls the system of the scanner.

A lamp 114 is driven by a lamp driver 113 according to a control signal from the controller 101 of the scanner to output the lights of red, green, and blue. The lights of red, green and blue are emitted from the lamp 114 to the object through an optical module 116 and then reflected by the object to be transmitted to a colour CCD sensor 104.

A step motor 115 makes the optical module 116 move in a sub-scanning direction according to a driving signal from the controller 101 of the scanner. The colour CCD sensor 104 photoelectrically converts the respective colour information for red, green, and blue into electrical analogue signal proportional to an amount of light which are transmitted to the colour CCD sensor 104 through the optical module 116.

A sensor driver 112 is supplied with a predetermined signal from the controller 101 of the scanner, which in turn supplies a clock signal for the colour CCD sensor 104 so that the colour CCD sensor 104 operates suitably. A buffer 105 transmits an analogue signal from the colour CCD sensor 104 to a multiplexer 106, while preventing a distortion of the CCD sensor signal due to a multiplexer 106.

The multiplexer 106 selectively outputs one of the information signals (B, G, R) for three colours which are inputted simultaneously, according to a signal from the controller 101 of the scanner. An analogue switch 107 selects an extent of amplification corresponding to a signal from the controller 101 of the scanner. An amplifier 108 amplifies the image signal which is selected by and output from the multiplexer 106 to the extent of amplification which is selected by the analogue switch 107 so that the image signal is converted into a predetermined level of output signal and output to pre-processor 109.

The pre-processor 109 carries out the black correction for the signal from the amplifier 108 and converts the analogue signal into digital image data.

A memory buffer 110 stores temporary image data converted into the digital signal by the pre-processor 109. An interface 111 transmits the image data which are stored in the memory buffer 110 to a computer 117 for adaptation so as to meet transmission requirements.

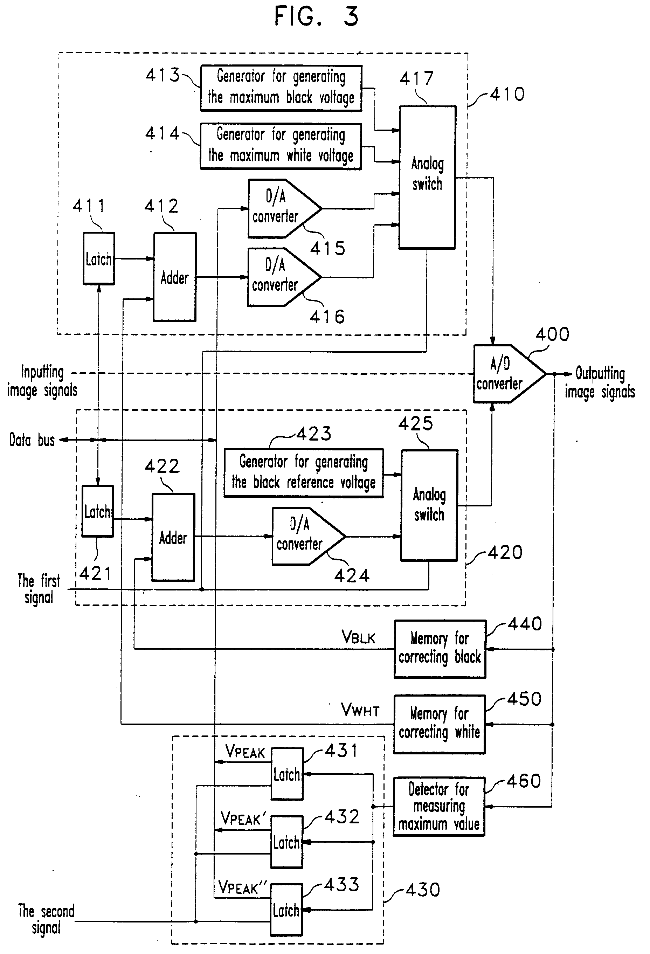

FIG 3 is a block diagram showing a construction of a pre-processor of an apparatus for image processing according to a second embodiment of the present invention.

As shown in FIG 3, an A/D converter 400 converts an analogue input image signal from a charge coupled device (CCD) into a digital output image signal.

A maximum black voltage generator 413 generates an upper limit reference voltage for use by the A/D converter 400 in converting the analogue signal into the digital signal. A maximum white voltage generator 414 generates an upper limit reference voltage for use by the A/D converter 400 in converting the analogue signal into the digital signal. A black reference voltage generator 423 generates a lower limit reference voltage for use by the A/D converter 400 in converting the analogue signal into the digital signal.

On the other hand, a D/A converter 415 converts a maximum value of a white reference plate stored in a latch 432, into an analogue voltage. A D/A converter 416 converts an output value of an adder 412 which adds white correcting data to the output of a latch 411 which is controlled according to a mode of image processing selected by a user and has a changed value stored therein, into an analogue voltage which is supplied to analogue switch 417. A D/A converter 424 converts an output value of an adder 422 which adds black correcting data to an output value of a latch 421 which is controlled by the user and has a changed value stored therein into an analogue voltage which is supplied to analogue switch 425.

Analogue switch 417 selects any one of data output from the maximum black voltage generator 413, the maximum white voltage generator 414, the D/A converter 415, and the D/A converter 416 according to a signal for selecting an operation mode ("the first signal"). Analogue switch 425 selects either the data output from the black reference voltage generator 423 or the D/A converter 424 according to a signal for selecting an operation mode ("the first signal").

A black correcting memory 440 has black correcting data output from the A/D converter 400 stored therein. A white correcting memory 450 has white correcting data output from the A/D converter 400 stored therein. A detector 460 detects the maximum value of digital data output from the A/D converter 400.

The latch 431 stores the maximum value of the white reference plate detected by the detector 460. The maximum pixel value of the document is stored in a latch 432. A maximum value of a main scanning line is stored in a latch 433.

The analogue switch 417 selects any one of data output from the maximum black voltage generator 413, the maximum white voltage generator 414, the D/A converter 415 and the D/A converter 416 according to a first selecting signal of a controller and sets the chosen data as the upper limit reference voltage. The first selecting signal is controlled according to an operation mode of processing the image and an operation mode of correcting a distortion of the image. Moreover, the analogue switch 417 selects any one of data output through the D/A converter 415 from the latch 431, the latch 432, or the latch 433 according to a second selecting signal of the controller ("the second signal") and supplies the chosen data for use by the A/D converter 400.

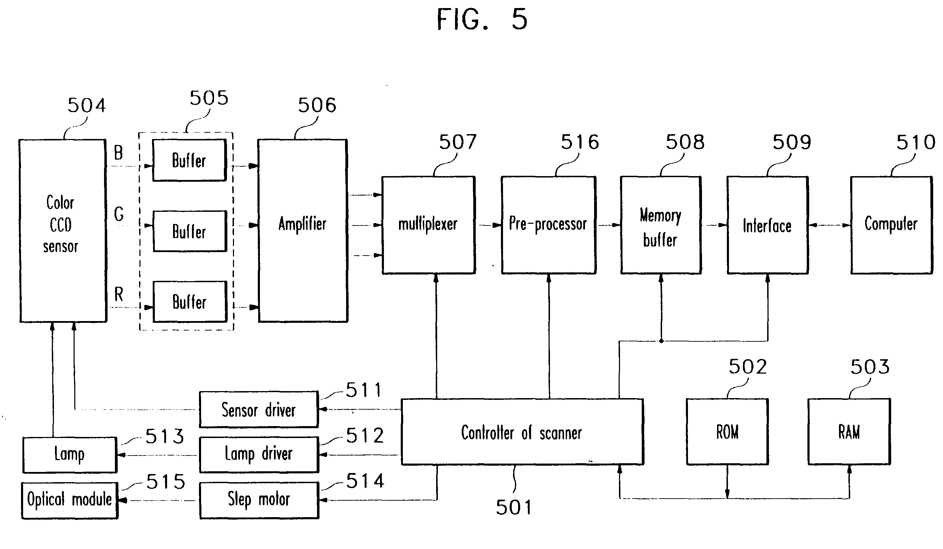

FIG 5 is a block diagram showing a construction of the apparatus for image processing according to the second embodiment of the present invention.

As shown in FIG 5 a controller 501 of a scanner generates a timing signal necessary for performing a scanning operation so as to read a document image as digital data, and also transfers a selected signal corresponding to a selected operation mode to a pre-processor 516. Furthermore, the controller 501 controls overall operations of the image processing apparatus.

A program and reference data are stored in a ROM 502 to control a scanning system according to a control sequence of the controller 501. Temporary data are generated while the controller 501 of the scanner controls the system and are stored in a RAM 503.

A lamp 513 is driven by a lamp driver 512 according to the control signal of the controller 501 of the scanner and emits three colours of light such as red, green and blue.

An optical module 515 provides a pathway for the three colours of light so that the three colours of light emitted from the lamp 513 are reflected by the document and then input to a photoelectric device such as colour CCD sensor 504. The optical module 515 focuses the three colours of light on the colour CCD sensor 504.

A step motor 514 is controlled according to a driving signal of the controller 501 of the scanner and moves the optical module 515 in a sub-scanning direction of the document. The colour CCD sensor 504 photoelectrically converts

6

colour information for the three primary colours of light such as red, green and blue into analogue signals in proportion to amount of the correspondingly coloured light input through the optical module 515.

The sensor driver 511 is supplied with a predetermined signal from the controller 501 of the scanner and provides clock signals for the colour CCD sensor 504 so that the colour signal sensor 504 operates suitably.

Buffers 505 transfer the analogue signals output from the colour CCD sensor 504 to an amplifier 506 which prevents the analogue signals of the CCD sensor from being distorted, as the signals have not passed through a multiplexer.

The amplifier 506 amplifies signals relating the three colours of light to a predetermined extent according to the signal of the controller 501 of the scanner so as to convert the signals relating the three colours of light into a certain level of an output signal and provides the amplified signals relating the three colours of light to a multiplexer 507.

The multiplexer 507 selects any one of the information signals for the three colours which are output from the amplifier 506 and supplies the chosen one information signal to a pre-processor 516. The pre-processor 516 receives the image signal selected by the multiplexer 507 and performs a correction of any distortion of the image, and further processes the image.

A memory buffer 508 contains temporary image data which have been converted into digital data by the pre-processor 516. An interfacing section 509 transfers the image data stored in the memory buffer 508 to a computer 510 for adaption so as to meet transmission requirements.

## First Embodiment

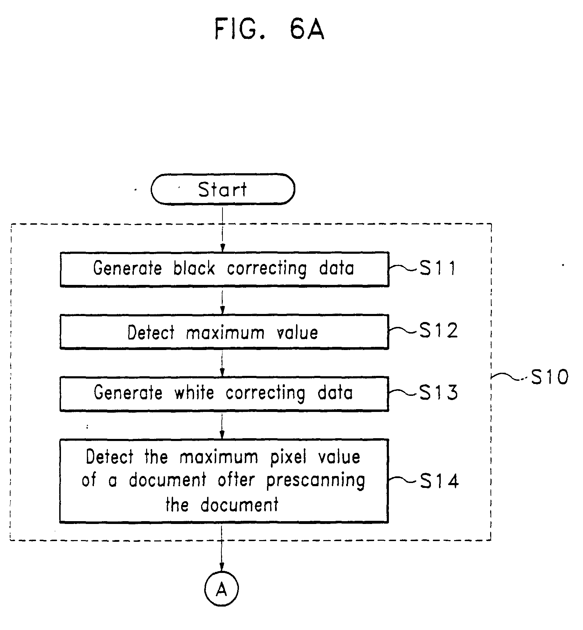

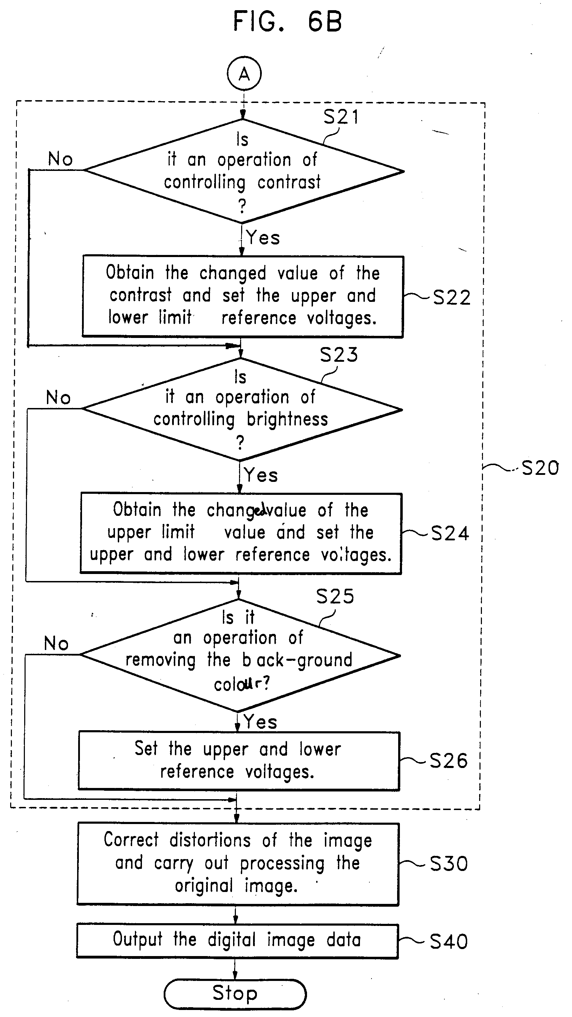

An operation of the apparatus and the method for image processing according to the first embodiment of the present invention will now be described in detail with reference to Table 1 and Figs. 2 and 4. Reference will be made to steps of the image processing method according to the present invention, as shown in Fig 6.

Table 1 shows modes corresponding to values of the selected signals and the upper and lower reference voltages

Table 1

| selecting signals | 0 | 1 | 2 | 3 | 3 | 2 |
|---|---|---|---|---|---|---|
| operation mode | generating black correcting value | detecting the maximum value | generating white correcting value | controlling contrast | controlling brightness | removing background colour |
| upper limit voltage | $V_{bmax}$: A | $V_{wmax}$: B | $V_{peak}$ | $V_{wht}$-$M\alpha$ | $V_{wht}$-$n\beta$ | $V_{peak}'$ |
| lower limit voltage | $V_{bref}$: C | $V_{blk}$ | $V_{blk}$ | $V_{blk}$+$M\alpha$ | $V_{blk}$ | $V_{blk}$ |

Wherein M is a control level of the contrast; n is a maximum control level of the brightness; $\alpha$ is a changed value of the contrast , typically the maximum pixel value of the white reference plate/256; and $\beta$ is the (maximum pixel value of the white reference plate - the maximum pixel value of the document during pre-scanning)/n, i.e. $n\beta$ is a changed upper limit value for use in brightness control.

## Black Detection

First, in order to generate the black correcting data, the selectors 306 and 307 of the pre-processor 109 are supplied with a selecting signal having the value of zero from the controller 101 and each value selected by each selector is input into the respective D/A converter 302 and 303 for setting the upper and lower limit reference voltages of the A/D converter 301.

As shown in Table 1, when value A is input into the D/A converter 302 to provide the black maximum voltage $V_{bmax}$ while the value C is input into the D/A converter 303 to provide the black reference voltage $V_{bref}$, A/D converter 301 converts the analogue input image signal in a range between the black reference voltage $V_{bref}$ as the lower limit reference voltage and the black maximum voltage $V_{bmax}$ as the upper limit reference voltage into the digital output image signal which in turn is stored in the black correcting memory 308 as at step S11 of Fig 6, to provide black correcting data.

**Maximum Value White Detection**

Then, to detect maximum value, a prescanning operation may be performed on the document to be scanned. The selectors 306 and 307 of the pre-processor 109 are supplied with a selecting signal having value 1 from the controller 101 of the scanner. The values which are selected by selectors 306 and 307 are each input into a respective one of D/A converters 302 and 303, which respectively set the upper and lower limit reference voltages of the A/D converter 301.

As shown in Table 1, the value B is input into the D/A converter 302 to output the white maximum voltage $V_{wmax}$. Meanwhile, the black correcting data $V_{blk}$ which are output from the black correcting memory 308 are input into the D/A converter 303, so that the A/D converter 301 converts the input analogue image data in the range between the black correcting voltage $V_{blk}$ as the lower limit reference voltage and the white maximum voltage $V_{wmax}$ as the upper limit reference voltage into the digital signal.

**Black Correction**

At that time, the black correcting data which are stored in the black correcting memory 308 are transmitted together with a pixel synchronous signal so as to output the corrected data for the pixel, thereby carrying out the correction of the black at the A/D converter 301.

At the step S12 (Fig 6), the input image data which have been converted into the digital image data are input into the detector 310 in order and are compared with the image data which are already input therein so as to detect the maximum value. When the CCD sensor carries out the process of detecting the data on one line, the maximum value which is detected in the region corresponding to the number of the effective pixels of the CCD sensor is provided as an input value for the selector 306.

**White Correction (Equalising)**

The selectors 306 and 307 of the pre-processor 109 are supplied with a selecting signal having value 2 from the controller 101 of the scanner, to generate the white correcting value. The value which is selected by each selector is input into the respective one of the D/A converters 302, 303 which set the upper and lower limit reference voltages of the A/D converter 301.

As shown in Table 1, the maximum white value $V_{peak}$ is input into the D/A converter 302 while the black correcting data $V_{blk}$ which are output from the black correcting memory 308 are input into the D/A converter 303, so that A/D converter 301 converts the analogue input image signal in the range between the black correcting voltage $V_{blk}$ as the lower limit reference voltage and the white reference plate maximum voltage $V_{peak}$ as the upper reference voltage into the output digital image data. The digital data are stored in the white correcting memory 309 in order so that the generation of the white correcting data is completed, at the step S13 of Fig 6.

When the generation of the white correcting data is completed, the colour image input device can now receive an input of an object image, and is ready to process the image.

Furthermore, the user can select one of various processing modes so as to improve the quality of the image, according to the condition of the object image.

When the scanner reads the document, the selectors 306 and 307 of the pre-processor 109 are supplied from the controller 101 of the scanner with the selecting signal having the value 3 according to the control operations of the contrast and the brightness and then a respective selected signal is input into each of the D/A converters 302 and 303 which set the upper and lower limit reference voltages of the A/D converter 301, within the step S20 of Fig 6.

At the step S21, it is determined whether the image processing which the user has selected is the contrast control operation.

**Contrast Control**

If the image processing which the user has selected is the contrast control operation, the selecting signal has a value 3 as shown in Table 1 and the adder 311 adds first data $-M\alpha$ which are stored in the latch 313, to the white correcting data $V_{wht}$ which are output from the white correcting memory 309. Then, the data $V_{wht}-M\alpha$ are input into the D/A converter 302 so as to be used as the upper limit reference voltage for A/D converter 301.

Furthermore, the adder 312 adds second data $+M\alpha$, which are stored in the latch 314, to the black correcting data $V_{blk}$ which are output from the black correcting memory 308. The data $V_{blk}+M\alpha$ are input into the D/A converter 303 so as to be used as the lower limit reference voltage for A/D converter 301, at the step S22 of Fig 6.

Therefore, the A/D converter 301 converts the image signal in the range between the lower limit reference voltage $V_{blk}+M\alpha$ and the upper limit reference voltage $V_{wht}-M\alpha$, into the digital signal.

Here, M represents the control level of the contrast and $\alpha$ represents a changed value of the contrast. The changed value $\alpha$ of the contrast will be obtained as follows, provided that the control level M of the contrast is controlled to the extent of the level 128 of the white and the level 128 of the black, as follows:

$$\alpha = \text{the maximum pixel value of the white reference plate}(V_{peak})/256$$

When the user selects any one level M of the 128 positive and 128 negative levels to carry out contrast control, the image is processed such that the white is gradually bright on the positive level and that the black is gradually dark on the negative level.

When the white is selected on the level M=3 and the black is selected on the level M=4, the changed value of the white is $3\alpha$ and the changed value of the black is $4\alpha$. Therefore, in order to select the upper limit reference voltage $V_{wht}$-$3\alpha$ and the lower limit reference voltage $V_{blk}$+$4\alpha$ before starting to contrast control, the correcting value of $3\alpha$ is stored in the latch 313 and the correcting value of $4\alpha$ is stored in the latch 314.

As described above, third data (the correcting value of $3\alpha$) which is stored in the latch 313 is added to the white correcting value $V_{wht}$ by the adder 311 so as to generate the upper limit reference voltage of the A/D converter 301. Fourth data ($4\alpha$) which is stored in the latch 314 is added to the black correcting value by the adder 312 so as to generate the lower limit reference voltage of the A/D converter 301. When the control of the contrast is performed, the white correction data $V_{wht}$ which are in sequence stored in the white correcting memory 309 are input into the adder 311 again to be used as the reference voltage for obtaining the upper limit voltage during the controlling of the contrast at the step S13. Further, when the control of the contrast is performed again, the black correction data $V_{blk}$ which are in sequence stored in the black correcting memory 308 are input into the adder 312 again to be used as the reference voltage for obtaining the lower limit voltage during the controlling of the contrast at the step S11.

On the other hand, if the user does not select contrast control at the step S21 or after performing the contrast control, as described, it is determined whether brightness control is to be carried out, at the step S23 of FIG. 6.

**Brightness Control**

When brightness control is carried out, the selecting signal has a value of 3 as shown in Table 1. The adder 311 adds data $\pm n\beta$ which are stored in the latch 313 to the white correcting data $V_{wht}$ which are output from the white correcting memory 309. The data $V_{wht}\pm n\beta$ are then input into the D/A converter 302 to be used as the upper reference voltage for A/D converter 301. Furthermore, the black correcting data $V_{blk}$ which are output from the black correcting memory 308 are input into the D/A converter 303 to be used as the lower reference voltage for A/D converter 301, at the step S24.

The A/D converter 301 converts the analogue input image signal in the range between the lower limit reference voltage $V_{blk}$ and the upper limit reference voltage $V_{wht}\pm n\beta$ into a digital format.

In a mode of reading a document image, the adder 311 is supplied with a latched value $n\beta$ which is transmitted from the data bus of the scanner controller 101 so as to set the upper limit reference voltage. The value $n\beta$ is determined as follows:

$$\beta = \text{(the maximum pixel value of the white reference}$$
$$\text{plate - the maximum pixel value of the document during the prescanning)}/n$$

wherein the n is the maximum brightness control level.

That is, a difference of the maximum pixel value $V_{peak}$ of the white reference plate reduced by the maximum pixel value $V_{peak}$' (which is obtained during the prescanning mode before the reading mode of the object image) is divided by the brightness control level to obtain the changed value $\beta$ of the upper limit value to be used for brightness control of the image.

The changed value of the upper limit value which is obtained by the above equation is used for carrying out the operation as described below according to the control level of the brightness on the image.

That is, if the user controls the brightness of the output image to be dark, the upper limit reference voltage is increased so that a dark image is output. For example, when the user selects the level 3 for making the image dark, the system may store an upper limit changed value of $3\beta$ in the latch 313 through the data bus. The adder 311 adds the upper limit changed value $3\beta$ to the white correcting data $V_{wht}$ which are output from the white correcting memory 309 so as to generate the upper limit reference voltage $V_{wht}$+$3\beta$. The upper limit reference voltage $V_{wht}$+$3\beta$ is supplied through the latch 304 to the D/A converter 302.

If the user controls the image to be bright, the upper limit reference voltage is decreased so that a bright image is output. For example, when the user selects the level 5 for making the image bright, the system stores a changed

upper limit value $5\beta$ in the latch 313 through the data bus. The adder 311 adds the changed upper limit value $-5\beta$ to the white correcting data $V_{wht}$ output from the white correcting memory 309. This results in reducing the white correcting data $V_{wht}$ by the changed value $5\beta$ from the upper limit value.

The upper limit reference voltage $V_{wht}$-$5\beta$ is generated and supplied through the latch 304 to the D/A converter 302. When the control of the brightness is performed again, the white correction data $V_{wht}$ which are in sequence stored in the white correcting memory 309 are input into the adder 311 again to be used as the reference voltage for obtaining the upper limit voltage during the controlling of the brightness at the step S13. Further, when the control of the brightness is performed again, the black correction data $V_{blk}$ which are in sequence stored in the black correcting memory 308 are input into the adder 312 again to be used as the reference voltage for obtaining the lower limit voltage during the controlling of the brightness.

If the image processing operation which the user selects is not brightness control at step S23, or after performing brightness control as discussed above, it is determined whether the operation which the user selects is to remove the background colour from the image as at the step S25.

**Removing Background Colour**

When the operation of removing the background colour from the image is carried out, the selecting signal has the value 2 as shown in the right hand column of Table 1. The maximum pixel value $V_{peak}$' of the object which is detected by the detector 310 during prescanning is selected by the selector 306 and then is input into the D/A converter 302 through the latch 304 so that the upper limit reference voltage $V_{peak}$' is generated to A/D converter 301, to be used for processing the background colour removal. Furthermore, the black correcting data $V_{blk}$ which is output from the black correcting memory 308 is selected by the selector 307 and then in input into D/A converter 303 through the latch 305 so that the lower limit reference voltage $V_{blk}$ is generated to A/D converter 301, to be used for processing the background colour removal, at the step S26 of FIG. 6.

Therefore, the A/D converter 301 converts the analogue input image signal in the range between the lower limit reference voltage $V_{blk}$ and the upper limit reference voltage $V_{peak}$' into the digital output image data. When the removing of the background colour from the image is performed again, the maximum pixel value of the document is detected by the maximum value detector 310 to be used as the upper limit voltage during the removal of the background colour and is input into the selector 306 again. Further, the black correcting data $V_{blk}$ which are in sequence stored in the black correcting memory 308 are input into the adder 312 again to be used as the lower limit voltage during the removal of the background colour at the step S11.

The white correcting (equalising) operation is preferably not carried out during the removing of the background colour from the image. The reason for that is that since an accuracy of removing the background colour of the image and a reference level to digitise the image data rather than white correcting the pixels of the output image data have an effect on the output image as a digitised image data are used as the image so that the scanner generally recognises the characters during the scanning, the operation of removing the background colour is made simple.

When the upper and lower limit reference voltages are determined and used for carrying out the reading (scanning) of the object (image), the black correcting process and the operation for removing the background colour are carried out simultaneously. Accordingly, the desired correcting process and the image processing can be accomplished by using a simple circuit, at the step S30 of FIG. 6.

The digital data which are generated during the processing as described above are selectively or simultaneously subjected to the black correcting processing using the black correcting voltage, to the white correcting processing using the white correcting voltage, contrast and brightness controlling operations, and the operation for removing the background colour. Thereby, the operation for correcting and processing the image preferably can be carried out by a simple circuit.

The output digital image data are provided from the object image at step S40 after carrying out the correction of the distortion of the object image and the process of the object image, at the step S30.

**Second Embodiment**

Hereinafter, an operation of the apparatus and the method for processing the image according to the second embodiment of the present invention will be described in detail with reference to Table 2 below and FIGs, 3 and 5, with reference to steps of the image processing method according to the present invention, as shown in Fig 6. Table 2 shows modes corresponding to values of the selecting signals and the upper and lower reference voltages.

Table 2

| First signal | 0 | 1 | 2 | 3 | 3 | 2 | |
|---|---|---|---|---|---|---|---|
| operation mode | generating black correcting value | detecting the maximum value | generating white correcting value | controlling contrast | controlling brightness | removing background colour | |
| upper limit voltage | $V_{bmax}$ | $V_{wmax}$ | $V_{peak}$ | $V_{wht}$-$M\alpha$ | $V_{wht}$ ±$n\beta$ | $V_{peak}$' | $V_{peak}$" |
| lower limit voltage | $V_{bref:}C$ | $V_{blk}$ | $V_{blk}$ | $V_{blk}$+$M\alpha$ | $V_{blk}$ | $V_{blk}$ | $V_{blk}$ |

Wherein M is a control level of the contrast and n is a maximum control level of the brightness; and $\alpha$ is the maximum pixel value of the white reference plate/256; $\beta$ is (the maximum pixel value of the white refrence plate - the maximum pixel value of the document during pre-scanning)/n.

**Black Detection**

First, in order to generate the black correcting data, a first signal is provided from the controller 501 of the scanner to the pre-processor 516 of Fig. 3, as shown in Fig 5, and has a value of zero. The first signal is also provided to analogue switches 417 and 425 as shown in FIG. 3. The values which are selected by each analogue switch 417 and 425 are respectively supplied as an upper limit reference voltage and a lower limit reference voltage to A/D converter 400.

As shown in the first column of Table 2, when the value of the first signal takes the value zero, the analogue switch 417 transfers a signal $V_{bmax}$ which is generated from maximum black voltage generator 413 to the A/D converter 400 and the analogue switch 425 transfers a signal $V_{bref,}C$ which is generated from reference black voltage generator 423 to the A/D converter 400. The signal $V_{bmax}$ of the maximum black voltage generator 413 and the signal C, $V_{bref}$ of the reference black voltage generator 423 respectively are set as upper and lower reference voltages for the A/D converter 400.

Accordingly, when generating black correcting data, the A/D converter 400 converts input analogue image signals into the output digital image data in a range between the maximum black voltage $V_{bmax}$ as the upper reference voltage and the reference black voltage $V_{bref}$ as the lower reference voltage. Then, the A/D converter 400 generates the digital data to be stored in black correcting memory 440 in sequence, at the step S11 of Fig 6.

**Maximum Value White Detection**

Next, in order to detect the maximum value by scanning a white reference plate, the first signal which is provided from the controller 501 of the scanner to the pre-processor 516 as shown in FIG. 3, takes a value of 1 as shown in the second column of Table 2. The first signal is provided to the analogue switches 417 and 425 as shown in FIG. 3. The values which are selected by each analogue switch are respectively supplied as the upper and lower limit voltages to the A/D converter 400.

As shown in the second column of Table 2, when the first signal is at value 1, the analogue switch 417 transfers a signal which is generated by a maximum white voltage generator 414 to the A/D converter 400. The analogue switch 425 transfers black correcting data from the black correcting memory 440 to the A/D converter 400. The signal of the maximum white voltage generator 414 and the black correcting data respectively are set as the upper and lower limit reference voltages for the A/D converter 400.

**Black Correction**

Accordingly, when detecting the maximum value $V_{peak}$ of the white reference image, the A/D converter 400 converts the input analogue image signal into the digital output image signal in a range between the maximum white voltage $V_{wmax}$ as the upper limit reference voltage and the black correcting voltage $V_{blk}$ as the lower limit reference voltage.

As the black correcting data which is stored in the black correcting memory 440 are output in correspondence with a pixel synchronous signal, the A/D converter 400 performs the black correction by using the black correcting voltage $V_{blk}$ which is output through the D/A converter 424 and the analogue switch 425.

**White Correction (Equalising)**

The input analogue image data which are converted into the output digital image data are input into the maximum detector 460 for detecting the maximum value, and are compared with a former pixel maximum value, at the step S12.

In order to generate a white correcting value, the first signal which is provided from the controller 501 to the pre-processor 516 and provided to the analogue switches 417 and 425 has value of 2 (as shown in the third column of Table 2). The values which are selected by each analogue switch are supplied as the upper and lower limit reference voltages to the A/D converter 400.

As shown in Table 2, when a value of the first signal is 2, the voltages transferred by the analogue switches 417 and 425 are respectively used as the upper and lower limit reference voltages by the A/D converter 400.

The maximum value $V_{peak}$ of the white reference plate detected by the maximum value detector 460 is converted by the D/A converter 415 and is supplied by analogue switch 417 to the A/D converter 400. The black correcting data $V_{blk}$ output from the black correcting memory 440 are converted by the adder 422 and the D/A converter 424 and supplied by analogue switch 425 to the A/D converter 400.

When generating the white correcting value, the A/D converter 400 converts the input analogue image signal into the output digital image data in the range between the maximum voltage $V_{peak}$ of the white reference plate as the upper limit reference voltage and the black correcting voltage $V_{blk}$ as the lower limit reference voltage.

The output digital image data which are generated during the process are stored in the white correcting memory 450 in the sequence. The operation of generating the white correcting data is thus performed, as shown at step S13 of Fig 6.

**Maximum White in Document**

Next, the maximum document pixel value $V_{peak}'$ is detected in a prescanning step. The prescanning step is performed before a mode of reading the document image, at the step S14 of Fig 6.

When the prescanning operation is completed, the colour image input device of the invention is able to start reading the document image.

The user can select among performing contrast control; brightness control; and removing of the background colour, to improve the quality of the document image. A driving program carried out in the computer 510 may be used before performing the scanning of the document.

When scanning the document, the first signal is provided from the controller 501 of the scanner to the to the analogue switches 417 and 425 of the pre-processor 516 shown in FIG.3, according to the required operations of contrast control, brightness control, and removing the background colour. The values selected by the analogue switches 417 and 425 are respectively supplied as the upper and lower limit reference voltages to the A/D converter 400, at the step S20 of Fig 6.

**Contrast Control**

At the step S21, it is determined whether the user selects the contrast control image processing operation.

If the user selects the contrast control operation, the first signal takes a value of 3 as shown in the fourth column of Table 2.

Then, the adder 412 adds the white correcting data $V_{wht}$ output from the white correcting memory 450 to data $-M\alpha$ stored in the latch 411. The D/A converter 416 transfers the white correcting data $V_{wht}$ added to the data $-M\alpha$ to the analogue switch 417. The analogue switch 417 selects the white correcting data $V_{wht}$ added to the data $-M\alpha$ as the upper limit reference voltage for A/D converter 400, corresponding to step S22 of Fig 6.

Furthermore, the adder 422 adds the black correcting data $V_{blk}$ output from the black correcting memory 440 to data $+M\alpha$ in the latch 421. Then, D/A converter 424 transfers the black correcting data $V_{blk}$ added to the data $+M\alpha$ to the analogue switch 425. The analogue switch 425 selects the black correcting data $V_{blk}$ added to the data $+M\alpha$ as the lower limit reference voltage for A/D converter 400, corresponding step S22 of Fig 6.

Accordingly, the A/D converter 400 converts the input analogue image data into the output digital image data in the range between the upper limit reference voltage $V_{wht}-M\alpha$ and the lower limit reference voltage $V_{blk}+M\alpha$.

The M represents a control level for the contrast and the $\alpha$ represents a changed value for the contrast. Provided that the control level of the contrast M is set to 128 level for the white and 128 level for the black, the changed value for the contrast $\alpha$ can be obtained as follows:

$\alpha$ = the maximum pixel value of the white reference plate/256.

When the user selects the specified control levels including a positive value and a negative value so as to control the contrast, the control level for the contrast having the positive value makes the image have more bright white colour and the control level for the contrast having the negative value makes the image to be processed to have more dark black colour.

When selecting a level 3 as the control level for the contrast of the white colour and a level 4 as control level for the contrast of the black colour, the changed value of the contrast for the black colour is $4\alpha$ and the changed value of the contrast for the white colour is - $3\alpha$. The data -$3\alpha$ is stored in the latch 411 through the data bus and the data $4\alpha$ is stored in the latch 421 through the data bus.

Then, the adder 412 adds the data -$3\alpha$ stored in the latch 411 to the white correcting value $V_{wht}$ and transfers the data -$3\alpha$ added to the white correcting value to the analogue switch 417 through the D/A converter 416. The analogue switch 417 provides the data $V_{wht}$-$3\alpha$ as the upper limit referencing voltage for the A/D converter 400, for performing contrast control.

The adder 422 adds the data $4\alpha$ stored in the latch 421 to the black correcting value $V_{blk}$ and transfers the data $4\alpha$ added to the black correcting value to the analogue switch 425 through the D/A converter 424. The analogue switch 425 provides the data $V_{blk}$+$4\alpha$ as the lower limit reference voltage for the A/D converter 400 for performing contrast control.

**Brightness Control**

On the other hand, if the user does not select the operation of controlling the contrast at the step S21, or after performance of the contrast control as discussed above, it is determined whether the user selects the brightness control operation, at the step S23 of Fig 6.

When the brightness control operation is selected, the first signal takes the value 3 as shown in the fifth column of Table 2.

The adder 412 adds the data $\pm n\beta$ stored in the latch 411 to the white correcting data $V_{wht}$ output from the white correcting memory 450 and transfers the data $\pm n\beta$ added to the white correcting data $V_{wht}$ to the analogue switch 417 through the D/A converter 416. The analogue switch 417 provides the data $V_{wht}\pm n\beta$ as the upper limit reference voltage for the A/D converter 400, at the step S24 of Fig. 6.

Furthermore, the black correcting data $V_{blk}$ output from the black correcting memory 440 is input into the D/A converter 424 and is set as the lower limit reference voltage for the D/A converter in step S24 of Fig. 6.

Accordingly, the A/D converter 400 converts the analogue input image signal into the digital output image data in range between the upper limit reference voltage $V_{wht}\pm n\beta$ and the lower limit reference voltage $V_{blk}$.

The data $n\beta$ stored in the latch to be used to set the upper limit reference voltage for controlling the brightness is determined as follows. That is, the changed value $\beta$ of the upper limit reference voltage used for controlling the brightness of the image is obtained by subtracting the maximum pixel value $V_{peak}$' of the document data which is obtained during the scanning of the document from the maximum pixel value $V_{peak}$ of the white reference plate and by dividing the resultant value by the number of levels for the control of the brightness.

$$\beta = \text{(the maximum pixel value of the white reference plate -}$$
$$\text{the maximum pixel value in the prescanning of the Document) }/n$$

wherein the n is the maximum control level for brightness.

The controller (e.g. a CPU) performs the following operation by using the changed value of the upper limit reference voltage according to the control level for the brightness which the user selects.

When the user wants to make the image dark, the CPU increases the upper limit reference voltage so as to make the image dark. That is, the adder 412 adds the white correcting data $V_{wht}$ output from the white correcting memory 450 to the changed value (e.g. $3\beta$) of the upper limit stored in the latch 411 according to the brightness control level which the user selects, and generates the upper limit reference voltage $V_{wht}$+$3\beta$. The upper limit reference voltage $V_{wht}$+$3\beta$ is provided to the A/D converter 400 through the D/A converter 416 and the analogue switch 417.

On the other hand, when the user wants to make the image to be bright, the CPU decreases the upper limit reference voltage to make the image brighter.

The changed value, for example -$5\beta$, is added to the white correcting data $V_{wht}$ output from the white correcting memory 450. That is, the adder 412 generates the upper limit reference voltage $V_{wht}$-$5\beta$. The upper limit reference voltage $V_{wht}$-$5\beta$ is provided to the A/D converter 400 through the D/A converter 416 and the analogue switch 417.

## Removal of Background Colour

If the user does not select the brightness control operation for the image at the step S23, or after completing a brightness control operation as described it is determined whether the operation of removing the background colour is required, at the step S25 of Fig. 6.

The removing of the background colour can be performed in either of at least two different manners, as follows.

The first signal takes the value 2, as shown in the right-hand column of Table 2. The maximum pixel value $V_{peak}'$ or $V_{peak}''$ of the document detected by the detector 460 is selected and transferred to the A/D converter 400 through the D/A converter 416 and the analogue switch 417 to provide the upper limit reference voltage with respect to the removing of the background colour, at the step S26 of Fig. 6.

On the other hand, the adder 422 adds the data stored in the latch 421 (being zero in this example) to the black correcting data $V_{blk}$ output from the black correcting memory 440 and transfers the result to the A/D converter 400 through the D/A converter 424 and the analogue switch 425. Then, the A/D converter 400 generates the lower limit reference voltage for use in removing the background colour at the step S26 of Fig. 6.

Accordingly, the A/D converter 400 converts the input analogue image signal into the digital output image data in the range between the upper limit reference voltage $V_{peak}'$ or $V_{peak}''$ and the lower limit reference voltage $V_{blk}$.

The removing of the background colour from the document image can be accomplished in a first manner by using the maximum value ($V_{peak}'$) of the document image which is detected by the maximum value detector 460 during the prescanning of the document and stored in the latch 432, or in a second manner which involves using the maximum value ($V_{peak}''$) which is detected from a main scanning line and stored in the latch 433.

In the case of using the maximum value ($V_{peak}'$) stored in the latch 432, the maximum value of the detected document data is used as the upper limit reference voltage throughout the document during the prescanning of the document.

In the case of using the maximum value stored in the latch 433, the maximum value detected from the main scanning line is used as the upper limit reference voltage during the processing of the next line.

The removing of the background colour by using either of the above two different manners can be selected by controlling the second signal according to the mode selected by the user. The black correcting data $V_{blk}$ output from the black correcting memory 440 is used as the lower limit reference voltage in the A/D converter 400, in either manner.

The difference between the two manners will now be briefly described. When the intensity of the background colour is constant on the document to be scanned, the removing of the background colour is preferably performed in the first manner. When the intensity of the background colour is variable on the document to be scanned, the removing of the background colour is preferably performed in the second manner.

The correcting of white (equalising) is preferably not performed during the removing of the background colour from the image data. The reason for that is that as the image data are converted into binary format during the scanning of the document, an accuracy of removing the background colour and a reference level for the conversion into binary format of the image data rather than the correcting of the white for each pixel have an effect on the quality of the image.

When the scanning of the document is performed after setting the upper and lower limit reference voltages as described above, the operations of correcting the black and removing the background colour can be simultaneously performed. Accordingly, only a simple circuit is required for the processing of the image data to be performed, at the step S30 of Fig. 6.

Finally, the image data on which the distortion of the image is corrected are converted into the digital output image data and may be printed or otherwise stored or transmitted, at the step S40 of Fig. 6.

According to the present invention as described above, an improved output image can be obtained by removing factors distorting the image, controlling the contrast and the brightness of the object image, and removing the background colour of the image during conversion of an analogue signal to a digital signal. Furthermore, there is an advantage in that the operations for correcting the distortion of the image and for processing the image in various manners cause a minimum of errors due to object characteristics of elements in the circuit.

Furthermore, since the processing of the image and the correcting of the distortion of the image can be performed by using the A/D converter, it is possible to further minimise errors in the image.

The equalising operation performed on an image, according to a feature of the present invention, involves scaling the data from a particular pixel by the value ($V_{wht}$) obtained for that pixel, in a scan of the white reference plate, or a prescanning of the document. In that way, any distortion which may be introduced into the image data due to the characteristics of the sensors, is reduced or eliminated.

The select signals referred to in respect of Tables 1 and 2 are preferably generated by each element in which the data are processed, which indicates the element processing the data.

While the present invention has been particularly described with reference to certain embodiments thereof, it will be understood by those skilled in the art that various changes variations and modifications may be made without departing from the invention.

## Claims

1. An image processing apparatus comprising:

- an image input device and a controller (101; 501), generating control signals;
- an A/D converter (301; 400) for converting an analogue image signal from the image input device into digital data by using a control signal from the controller,;
- an upper limit reference voltage setting means for setting an upper limit reference voltage for the A/D converter;
- a lower limit reference voltage setting means for setting a lower limit reference voltage for the A/D converter;
- a black correcting memory (308; 440) for storing black correcting data;
- a white correcting memory (309; 450) for storing white correcting data; and
- a maximum value detector (310; 460) for detecting a maximum pixel data value from digital image data output from the A/D converter.

2. An image processing apparatus according to claim 1, further comprising:

- a reference data storing section (430) for storing data supplied by the maximum value detector.

3. An image processing apparatus as claimed in claim 1 or claim 2 arranged such that the black correcting data is supplied by the A/D converter in response to an analogue image signal; and arranged such that the white correcting data is supplied by the A/D converter in response to an analogue image signal.

4. An image processing apparatus as claimed in any of claims 1-3 wherein the controller is arranged to supply one or more of a changed value of a contrast, and a changed value of a brightness, and the upper and lower limit reference voltage setting means are arranged to set the upper and lower limit reference voltages in accordance with one or more of the changed value of a contrast, and the changed value of a brightness, the A/D converter thereby being enabled to perform correction of image distortion and image processing on the analogue image signal.

5. An image processing apparatus as claimed in any of claims 1-4, wherein the control signals provide one or more of:

- a signal ('0') for selecting a mode of reading a magnitude of a black current output in accordance with pixels of the image input device;
- a signal ('1') for selecting a mode of reading a maximum value of an image signal output corresponding to a white reference plate;
- a signal ('2') for selecting a mode of performing an equalisation of the image after detecting distortions in the image signal corresponding to the white reference plate;
- a signal ('3') for selecting a contrast control mode;
- a signal ('2') for selecting a background colour removing mode; and.
- a signal ('3') for selecting a brightness control mode.

6. An image processing apparatus as claimed in claim 5, wherein the signal for selecting the mode of removing the background colour includes a signal for selecting a maximum pixel value ($V_{peak}'$) of the document obtained in a prescanning mode as the upper limit voltage.

7. An image processing apparatus as claimed in claim 5, wherein the signal for selecting the mode of removing the background colour includes a signal for selecting a maximum pixel value ($V_{peak}''$) of a main scanning line of the image input device as the upper limit reference voltage.

8. An image processing apparatus as claimed in any preceding claim, wherein the upper limit reference voltage setting means includes:

- a first adder (311; 412) for adding a changed value ($-M\alpha$) of the upper limit value for controlling contrast, or a changed value ($\pm n\beta$) of the upper limit value for controlling brightness, to data ($V_{wht}$) output from the white correcting memory (309; 450), so as to obtain the upper limit reference voltage;
- a first selector (306; 417) for selecting any one of: a value output from the first adder; a value output from the maximum value detector (310; 460); and a preset and input value (A, B; 413, 414) according to a control signal from the controller; and
- a first D/A converter (302; 416) for converting at least the output of the first adder.

9. An image processing apparatus according to claim 8 and claim 2 wherein the upper limit reference voltage setting means includes a D/A converter (415) receiving an output of the reference data storage section.

10. An image processing apparatus as claimed in any preceding claim, wherein the lower limit reference voltage setting means includes:

- a second adder (312; 422) for adding a changed value ($M\alpha$) of the lower limit value to the data ($V_{blk}$) output from the black correcting memory (308; 440) so as to obtain the lower limit reference voltage for controlling the contrast;
- a second selector (307; 425) for selecting any one of: a value output from the second adder; and a preset and input value (C; 423), according to a control signal from the controller; and
- a second D/A converter (303; 424) for converting at least the output of the second adder.

11. An image processing apparatus according to any of claims 8-10 wherein the first and/or second selector is an analogue switch.

12. An image processing apparatus as claimed in claim 10, wherein, in the lower limit reference voltage setting means, the second D/A converter is placed between the second adder and the second selector, to convert a digital output of the second adder into an analogue input to the second selector.

13. An image processing apparatus as claimed in any preceding claim, further comprising at least one of:

- a maximum black voltage source (413) for providing the upper limit reference voltage (A; $V_{bmax}$) to create the black correcting value; and
- a maximum white voltage source (414) for providing the upper limit reference voltage (B; $V_{wmax}$) for detection of the maximum value.

14. An image processing apparatus according to any preceding claim further comprising voltage sources for generating a black correcting value and a reference voltage for detecting the maximum value.

15. An image processing apparatus as claimed in claim 2, wherein the reference data storing means includes:

- a first latch (431) for storing a maximum pixel value ($V_{peak}$) for a white reference plate of the image input device;
- a second latch (432) for storing a maximum pixel value ($V_{peak}'$) of a document data obtained by prescanning the document; and
- a third latch (433) for storing a maximum pixel value ($V_{peak}''$) in a main scanning line of the image input device.

16. An image processing method using an image input apparatus having a pre-processor (109; 516) which includes a white correcting memory (309; 450), a black correcting memory (308; 440), and a detector for measuring maximum value (310; 460), the method comprising the steps of:

- generating reference data ($V_{wht}$, $V_{blk}$) and correcting distortion of the image;
- selecting an image processing operation from a selection of operations, including contrast control; brightness control; and removing a background colour of the image;
- setting an upper limit reference voltage and a lower limit reference voltage corresponding to the selected operation for use in digitally converting an analogue input image data; and
- simultaneously performing white correction and black correction of the image using the reference data, while performing the selected operation for the image, and digitally converting the image data using the upper and lower limit reference voltages.

17. An image processing method as claimed in claim 16, wherein the step for generating the reference data includes the steps of:

- generating black correcting data ($V_{blk}$) to correct errors due to characteristics of an image input device (104; 504);
- detecting a maximum value of pixel data from the black correcting data; and
- generating white correcting data ($V_{wht}$) to remove distortion effects on the image.

**18.** An image processing method as claimed in claim 16 or claim 17, wherein the step for setting the upper and lower limit reference voltages for controlling the contrast of the image includes the steps of:

- multiplying a contrast control level by a changed value of the contrast;
- generating the upper limit reference voltage by subtracting the multiplied value ($M\alpha$) from white correcting data ($V_{wht}$) which are output from the white correcting memory; and
- generating the lower limit reference voltage by adding the multiplied value to black correcting data ($V_{blk}$) which are output from the black correcting memory.

**19.** An image processing method as claimed in claim 18, wherein the changed value of the contrast is obtained by dividing a maximum value of pixel data of a white reference image by the maximum control level of the contrast.

**20.** An image processing method for processing image as claimed in claim 16 or claim 17, wherein the step of setting the upper limit reference voltage and the lower limit reference voltage for brightness control includes the steps of:

- multiplying a brightness control level by a changed value of the upper limit reference values;
- generating the upper limit reference value by subtracting the multiplied value ($n\beta$) from a white correcting data ($V_{wht}$) which are output from the white correcting memory; and
- generating the lower limit reference voltage corresponding to black correcting data ($V_{blk}$) which are output from the black correcting memory.

**21.** An image processing method as claimed in claim 20, wherein the changed value of the upper limit reference value is obtained by subtracting a maximum pixel value of image ($V_{peak}'$), detected during a prescanning of the document, from the maximum pixel value ($V_{peak}$) of a white reference image; and by dividing the subtracted value by a maximum control level of the brightness.

**22.** An image processing method as claimed in claim 16 wherein, in order to remove the background colour of the image, the maximum pixel value ($V_{peak}'$) of the image which is detected by the detector for measuring the maximum value is used as the upper limit reference value, while the black correcting data ($V_{blk}$) which is output from the black correcting memory is used as a lower limit reference value.

**23.** An image processing method as claimed in any of claims 16-22, further including the step of outputting the image of which the image distortion is corrected and for which the selected operation is carried out, as the digital image data.

**24.** An image processing method or apparatus as described and/or as illustrated in Figs 2-6B of the accompanying drawings.

EP 0 920 193 A2

FIG. 1

18

# FIG. 2

# FIG. 3

FIG. 4

# FIG. 5

Block diagram showing:

- 510 Computer
- 509 Interface
- 508 Memory buffer
- 516 Pre-processor
- 507 multiplexer
- 506 Amplifier
- 505 Buffer / Buffer / Buffer
- 504 Color CCD sensor (B, G, R)
- 503 RAM
- 502 ROM
- 501 Controller of scanner
- 511 Sensor driver
- 512 Lamp driver
- 514 Step motor
- 513 Lamp
- 515 Optical module

22

# FIG. 6A

Start

Generate black correcting data ~S11

Detect maximum value ~S12

Generate white correcting data ~S13

Detect the maximum pixel value
of a document ofter prescanning
the document ~S14

~S10

A

# FIG. 6B

(A)

```
                    S21
         Is
      it an operation of
  No   controlling contrast
         ?
              Yes

  Obtain the changed value of the
  contrast and set the upper and      ~S22
  lower limit  reference voltages.

                    S23
         Is
      it an operation of
  No  controlling brightness
         ?
              Yes

  Obtain the change value of the
  upper limit  value and set the      ~S24
  upper and lower reference voltages.

                    S25
        Is it
     an operation of
  No removing the back-ground
        colour?
              Yes

   Set the upper and lower             ~S26
   reference voltages.
```
───────────────────────────── S20

```
  Correct distortions of the image
  and carry out processing the        ~S30
  original image.

  Output the digital image data        ~S40

           ( Stop )
```